# EUROPEAN PATENT APPLICATION

(11) **EP 3 647 103 A1**
(43) Date of publication of application: **06.05.2020**
(21) Application number: 19205477.3
(22) Date of filing: 25.10.2019
(51) Int. Cl.: B60K 6/365, B60K 6/445, B60K 6/547, B60W 10/06, B60W 10/08, B60W 10/10, B60W 10/115, B60W 20/00, B60L 1/00, B60L 50/16, F16H 61/00

(54) **CONTROL DEVICE OF HYBRID VEHICLE**

(30) Priority: 25.10.2018 JP 2018201295
(71) Applicant: TOYOTA JIDOSHA KABUSHIKI KAISHA, Toyota-shi, Aichi-ken, 471-8571 (JP)
(72) Inventor: IKEMOTO, Kouji, Aichi-ken, 471-8571 (JP); TABATA, Atsushi, Aichi-ken, 471-8571 (JP); KONO, Tetsuya, Aichi-ken, 471-8571 (JP); OKUDA, Koichi, Aichi-ken, 471-8571 (JP)
(74) Representative: D Young & Co LLP

(57) **Abstract**

A control device of a hybrid vehicle including an engine, a first rotating machine, a power transmission device, a differential mechanism, a lock mechanism, a mechanical oil pump, and an electric oil pump, the control device comprises: a hybrid control portion; a state determining portion; and a flow rate control portion prohibiting the double drive motor running to cause the hybrid vehicle to run in the single drive motor running and controlling the first rotating machine to rotate the mechanical oil pump to cause the mechanical oil pump to discharge the hydraulic oil at the flow rate required for the power transmission device when it is determined that the electric oil pump is in the state of insufficient capacity at the time of running in the motor running mode.

## Description

### FIELD OF THE INVENTION

The present invention relates to a control device of a hybrid vehicle including an engine, a first rotating machine, a differential mechanism, a second rotating machine, a lock mechanism, a mechanical oil pump, and an electric oil pump.

### DESCRIPTION OF THE RELATED ART

A well-known control device of a hybrid vehicle includes: an engine; a first rotating machine; a power transmission device transmitting power of the engine to drive wheels; a differential mechanism that constitutes a portion of the power transmission device and that includes a first rotating element to which the engine is coupled in a power transmittable manner, a second rotating element to which the first rotating machine is coupled in a power transmittable manner, and a third rotating element to which an output rotating member is coupled in a power transmittable manner; a second rotating machine coupled to the output rotating member in a power transmittable manner; a lock mechanism configured to fix the first rotating element non-rotatably; a mechanical oil pump rotated together with rotation of the engine to discharge a hydraulic oil used in the power transmission device; and an electric oil pump rotated by a motor dedicated to the electric oil pump to discharge the hydraulic oil. For example, this corresponds to a control device of a hybrid vehicle described in Patent Document 1. According to the disclosure of Patent Document 1, if a normal operation of the electric oil pump is impossible at the time of running in a motor running mode using at least the second rotating machine is used as a power source out of the first rotating machine and the second rotating machine with the operation of the engine stopped, it is determined that a double drive motor running using both the first rotating machine and the second rotating machine as power sources is impossible, and the double drive motor running is prohibited.

### PRIOR ART DOCUMENT

### Patent Document

Patent Document 1: Japanese Laid-Open Patent Publication No. 2016-179727

### SUMMARY OF THE INVENTION

### Technical Problem

In a hybrid vehicle in which a mechanical oil pump and an electric oil pump are used as oil pressure sources discharging a hydraulic oil at a flow rate required for the power transmission device, if the electric oil pump is in a state of insufficient capacity in which the hydraulic oil cannot be discharged at a flow rate required for the power transmission device by the electric oil pump alone, it is conceivable that the hydraulic oil is discharged by the mechanical oil pump. Therefore, if the electric oil pump is in the state of insufficient capacity at the time of running in the motor running mode, it is conceivable that as disclosed in Patent Document 1, a change is made to a hybrid running mode in which at least the engine is used as a power source for running so as to cause the mechanical oil pump to discharge the hydraulic oil. However, in such a form, the vehicle cannot run in the motor running mode. The electric oil pump in the state of insufficient capacity causes a problem that ensuring the flow rate of the hydraulic oil is difficult, when the vehicle runs in the motor running mode.

The present invention was conceived in view of the situations and it is therefore an object of the present invention to provide a control device of a hybrid vehicle configured to appropriately ensure a hydraulic oil at a flow rate required for a power transmission device even when an electric oil pump is in a state of insufficient capacity at the time of running in a motor running mode.

### Solution to Problem

To achieve the above object, a first aspect of the present invention provides a control device of a hybrid vehicle including (a) an engine, a first rotating machine, a power transmission device transmitting a power of the engine to drive wheels, a differential mechanism that constitutes a portion of the power transmission device and that includes a first rotating element to which the engine is coupled in a power transmittable manner, a second rotating element to which the first rotating machine is coupled in a power transmittable manner, and a third rotating element to which an output rotating member is coupled, a second rotating machine coupled to the output rotating member in a power transmittable manner, a lock mechanism configured to fix the first rotating element non-rotatably, a mechanical oil pump rotated together with the rotation of the engine to discharge a hydraulic oil used in the power transmission device, and an electric oil pump rotated by a motor dedicated to the electric oil pump to discharge the hydraulic oil, the control device comprising: (b) a hybrid control portion causing the hybrid vehicle to run in a single drive motor running using only the second rotating machine as a power source, or causing the hybrid vehicle to run in a double drive motor running using both the first rotating machine and the second rotating machine as the power sources with the first rotating element fixed by the lock mechanism, in a motor running mode in which at least the second rotating machine is used as the power source for running out of the first rotating machine and the second rotating machine with operation of the engine stopped; (c) a state determining portion determining whether the electric oil pump is in a state of insufficient capacity in which the electric oil pump is prevented from discharging the hydraulic oil alone at a flow rate required for the power transmission device; and (d) a flow rate control portion prohibiting the double drive motor running to cause the hybrid vehicle to run in the single drive motor running and controlling the first rotating machine to rotate the mechanical oil pump to cause the mechanical oil pump to discharge the hydraulic oil at the flow rate required for the power transmission device when it is determined that the electric oil pump is in the state of insufficient capacity at the time of running in the motor running mode.

A second aspect of the present invention provides the control device of the hybrid vehicle recited in the first aspect of the invention, wherein the state determining portion determines whether the electric oil pump is in the state of insufficient capacity based on whether a failure has occurred so that the electric oil pump is prevented from discharging the hydraulic oil.

A third aspect of the present invention provides the control device of the hybrid vehicle recited in the first or second aspect of the invention, wherein the state determining portion determines whether the electric oil pump is in the state of insufficient capacity based on whether a temperature of the hydraulic oil is lower than a predetermined oil temperature, and wherein the predetermined oil temperature is a lower limit value of a predefined high oil temperature region of the hydraulic oil in which the electric oil pump discharges the hydraulic oil at the flow rate required for the power transmission device.

A fourth aspect of the present invention provides the control device of the hybrid vehicle recited in the third aspect of the invention, wherein when it is determined that the electric oil pump is in the state of insufficient capacity since the temperature of the hydraulic oil is lower than the predetermined oil temperature, the flow rate control portion causes the electric oil pump to discharge the hydraulic oil in addition to controlling the first rotating machine to cause the mechanical oil pump to discharge the hydraulic oil.

A fifth aspect of the present invention provides the control device of the hybrid vehicle recited in any one of the first to fourth aspects of the invention, wherein the hybrid control portion causes the hybrid vehicle to run in the double drive motor running in a first motor running region in which a required drive power is achieved by the single drive motor running at the time of running in the motor running mode, and wherein the flow rate control portion prohibits the double drive motor running to cause the hybrid vehicle to run in the single drive motor running, when it is determined that the electric oil pump is in the state of insufficient capacity at the time of running in the motor running mode in the first motor running region.

A sixth aspect of the present invention provides the control device of the hybrid vehicle recited in the fifth aspect of the invention, wherein when it is determined that the electric oil pump is in the state of insufficient capacity at the time of running in the motor running mode in a second motor running region in which the required drive power is achieved by the double drive motor running, the flow rate control portion prohibits the double drive motor running, and changes the motor running mode to a hybrid running mode in which at least the engine is used as the power source for running instead of causing the hybrid vehicle to run in the single drive motor running.

A seventh aspect of the present invention provides the control device of the hybrid vehicle recited in any one of the first to sixth aspects of the invention, wherein the flow rate control portion controls the first rotating machine such that a rotation speed of the mechanical oil pump is made higher as a temperature of the hydraulic oil is lower, when the first rotating machine is controlled to cause the mechanical oil pump to discharge the hydraulic oil.

An eighth aspect of the present invention provides the control device of the hybrid vehicle recited in any one of the first to seventh aspects of the invention, wherein the flow rate control portion controls the first rotating machine such that a rotation speed of the mechanical oil pump is made higher as an engine cooling water temperature is lower, when the first rotating machine is controlled to cause the mechanical oil pump to discharge the hydraulic oil.

A ninth aspect of the present invention provides the control device of the hybrid vehicle recited in any one of the first to eighth aspects of the invention, wherein the flow rate control portion permits the double drive motor running and controls the motor dedicated to the electric oil pump to cause the electric oil pump to discharge the hydraulic oil at the flow rate required for the power transmission device, when it is determined that the electric oil pump is not in the state of insufficient capacity at the time of running in the motor running mode.

A tenth aspect of the present invention provides the control device of the hybrid vehicle recited in any one of the first to ninth aspects of the invention, wherein the hybrid control portion causes the second rotating machine to output a torque responsible for a reaction torque generated in the output rotating member in association with the output of the first rotating machine, when the flow rate control portion controls the first rotating machine to rotate the mechanical oil pump.

An eleventh aspect of the present invention provides the control device of the hybrid vehicle recited in any one of the first to tenth aspects of the invention, wherein the power transmission device includes an automatic transmission constituting a portion of a power transmission path between the output rotating member and the drive wheels and having a plurality of engagement devices with which each of a plurality of gear positions is formed by engaging a predetermined engagement device of the plurality of engagement devices, and wherein the flow rate control portion causes the mechanical oil pump to discharge the hydraulic oil at the flow rate required for engagement of the engagement device, when it is determined that the electric oil pump is in the state of insufficient capacity at the time of running in the motor running mode.

A twelfth aspect of the present invention provides the control device of the hybrid vehicle recited in any one of the first to tenth aspects of the invention, wherein the power transmission device includes an engagement device having an operation state switched by the hydraulic oil, and wherein the flow rate control portion causes the mechanical oil pump to discharge the hydraulic oil at the flow rate required for engagement of the engagement device, when it is determined that the electric oil pump is in the state of insufficient capacity at the time of running in the motor running mode. Advantageous Effects of Invention

According to the first aspect of the invention, if the electric oil pump is in the state of insufficient capacity at the time of running in the motor running mode, the double drive motor running is prohibited to cause the hybrid vehicle to run in the single drive motor running, and the first rotating machine is controlled to rotate the mechanical oil pump so that the hydraulic oil is discharged at the flow rate required for the power transmission device by the mechanical oil pump, so that the mechanical oil pump can be driven by the first rotating machine during running in the motor running mode. Therefore, even if the electric oil pump is in the state of insufficient capacity at the time of running in the motor running mode, the hydraulic oil at the flow rate required for the power transmission device can appropriately be ensured.

According to the second aspect of the invention, whether the electric oil pump is in the state of insufficient capacity is determined based on whether a failure has occurred so that the electric oil pump cannot discharge the hydraulic oil, and therefore, even if the electric oil pump is in a failure state at the time of running in the motor running mode, the hydraulic oil at the flow rate required for the power transmission device can appropriately be ensured.

According to the third aspect of the invention, whether the electric oil pump is in the state of insufficient capacity is determined based on whether the hydraulic oil temperature is lower than the predetermined oil temperature, and therefore, even if the hydraulic oil temperature is low so that the flow rate of the hydraulic oil oil becomes insufficient when the electric oil pump is used alone at the time of running in the motor running mode, the hydraulic oil at the flow rate required for the power transmission device can appropriately be ensured. If the hydraulic oil temperature becomes equal to or higher than the predetermined oil temperature and the electric oil pump can discharge the hydraulic oil alone at the flow rate required for the power transmission device, the drive of the mechanical oil pump by the first rotating machine can be stopped.

According to the fourth aspect of the invention, if the electric oil pump is in the state of insufficient capacity since the hydraulic oil temperature is lower than the predetermined oil temperature, the hydraulic oil is discharged by the electric oil pump in addition to the mechanical oil pump, so that before the drive of the mechanical oil pump is stopped since the hydraulic oil temperature becomes equal to or higher than the predetermined oil temperature, the temperature of the hydraulic oil flowing through the electric oil pump can be raised and an output port of the electric oil pump can be filled with the hydraulic oil. As a result, immediately after the drive of the mechanical oil pump is stopped, the hydraulic oil can be discharged at the required flow rate by the electric oil pump.

According to the fifth aspect of the invention, if the electric oil pump is in the state of insufficient capacity at the time of running in the motor running mode in the first motor running region in which the required drive power can be achieved by the single drive motor running, the double drive motor running is prohibited to cause the hybrid vehicle to run in the single drive motor running, so that the mechanical oil pump can be driven by the first rotating machine during running in the motor running mode.

According to the sixth aspect of the invention, if the electric oil pump is in the state of insufficient capacity at the time of running in the motor running mode in the second motor running region in which the required drive power can be achieved by the double drive motor running, the double drive motor running is prohibited and the motor running mode is changed to the hybrid running mode to cause the hybrid vehicle to run in the hybrid running mode, so that the hydraulic oil at the flow rate required for the power transmission device can appropriately be ensured while achieving the large required drive power that cannot be achieved by the single drive motor running.

According to the seventh aspect of the invention, when the first rotating machine is controlled to cause the mechanical oil pump to discharge the hydraulic oil, the first rotating machine is controlled such that the rotation speed of the mechanical oil pump is made higher when the hydraulic oil temperature is lower, and therefore, the hydraulic oil at the flow rate required for the power transmission device can be ensured even at low oil temperature.

According to the eighth aspect of the invention, when the first rotating machine is controlled to cause the mechanical oil pump to discharge the hydraulic oil, the first rotating machine is controlled such that the rotation speed of the mechanical oil pump is made higher when the engine cooling water temperature is lower, and therefore, an increase in temperature of sliding portions of the engine is promoted when the engine is cooler, and the sliding resistance is easily reduced. Thus, warm-up of the engine can be promoted while reducing an electric power for driving the first rotating machine. As a result, the energy required for the next starting process of the engine can be reduced.

According to the ninth aspect of the invention, if the electric oil pump is not in the state of insufficient capacity at the time of running in the motor running mode, the double drive motor running is permitted, and the motor dedicated to the electric oil pump is controlled to cause the electric oil pump to discharge the hydraulic oil at the flow rate required for the power transmission device, so that the first rotating machine and the second rotating machine can efficiently be operated in running in the motor running mode, and the hydraulic oil at the flow rate required for the power transmission device can appropriately be ensured. Additionally, the drive of the mechanical oil pump by the first rotating machine accompanied by an increase in a rotation speed of the engine in an operation stopped state is limited to when the electric oil pump has insufficient capacity, so that a deterioration in efficiency can be suppressed.

According to the tenth aspect of the invention, when the first rotating machine is controlled to rotate the mechanical oil pump, the second rotating machine outputs the torque responsible for the reaction torque generated in the output rotating member in association with the control of the first rotating machine, so that a drop in a drive torque of the vehicle is suppressed when the mechanical oil pump is driven by the first rotating machine.

According to the eleventh aspect of the invention, if the electric oil pump is in the state of insufficient capacity at the time of running in the motor running mode, the mechanical oil pump discharges the hydraulic oil at the flow rate required for the engagement of the engagement devices included in the automatic transmission, so that the each gear position of the automatic transmission is appropriately formed even if the electric oil pump is in the state of insufficient capacity. In other words, the shift of the automatic transmission is appropriately performed.

According to the twelfth aspect of the invention, if the electric oil pump is in the state of insufficient capacity at the time of running in the motor running mode, the mechanical oil pump discharges the hydraulic oil at the flow rate required for the engagement of the engagement devices included in the power transmission device, so that the operation states of the engagement devices is appropriately switched even if the electric oil pump is in the state of insufficient capacity.

### BRIEF DESCRIPTION OF DRAWINGS

Fig. 1 is a diagram for explaining a schematic configuration of a vehicle to which the present invention is applied and is also a diagram for explaining a main portion of a control function and a control system for various controls in the vehicle.
Fig. 2 is an operation chart for explaining a relationship between gear shift positions of a mechanical step-variable transmission portion illustrated in Fig. 1 and a combination of operations of engagement devices used therein.
Fig. 3 is a collinear chart representative of a relative relationship of rotation speeds of rotating elements in an electric continuously variable transmission portion and the mechanical step-variable transmission portion.
Fig. 4 is a diagram for explaining a hydraulic control circuit and is a diagram for explaining an oil pressure source supplying a hydraulic oil to the hydraulic control circuit.
Fig. 5 is a diagram showing an example of a shift map used for shift control of the step-variable transmission portion and a power source switching map used for switching control between hybrid running and motor running, also showing a relationship of the maps.
Fig. 6 is a diagram showing an example of a mechanical oil pump (MOP) drive region and an electric oil pump (EOP) drive region.
Fig. 7 is a diagram showing an example of a target rotation speed of the MOP at the time of drive of the MOP.
Fig. 8 is a flowchart for explaining a main portion of a control operation of an electronic control device, i.e., the control operation for appropriately ensuring the hydraulic oil at a flow rate required for the hydraulic control circuit even if the EOP is in a state of insufficient capacity at the time of running in a motor running mode.
Fig. 9 is an example of a time chart when the control operation shown in the flowchart of Fig. 8 is performed.

### MODES FOR CARRYING OUT THE INVENTION

In an embodiment of the present invention, a speed change ratio in the differential mechanism or the automatic transmission is "a rotation speed of an input-side rotating member/a rotation speed of an output-side rotating member". The higher side of this speed change ratio is the higher vehicle speed side on which the speed change ratio becomes smaller. The lower side of the speed change ratio is the lower vehicle speed side on which the speed change ratio becomes larger. For example, the lowermost-side speed change ratio is the speed change ratio on the lowest vehicle speed side on which the vehicle speed is lowest and is the maximum speed change ratio at which the speed change ratio has the largest value.

An example of the present invention will now be described in detail with reference to the drawings.

### First Example

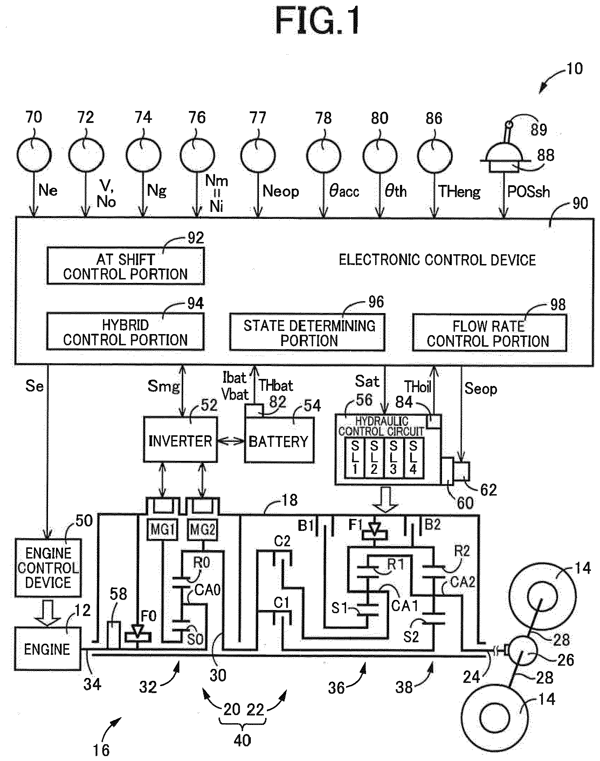

Fig. 1 is a diagram for explaining a schematic configuration of a vehicle 10 to which the present invention is applied and is also a diagram for explaining a main portion of a control system for various controls in the vehicle 10. In Fig. 1, the vehicle 10 is a hybrid vehicle including an engine 12 serving as an engine, a first rotating machine MG1, and a second rotating machine MG2 functioning as power sources for running configured to generate a drive torque. The vehicle 10 also includes drive wheels 14 and a power transmission device 16 disposed in a power transmission path between the engine 12 and the drive wheels 14.

The engine 12 is a known internal combustion engine such as a gasoline engine and a diesel engine, for example. The engine 12 has an engine torque Te that is an output torque of the engine 12 controlled by an electronic control device 90 described later controlling an engine control device 50 such as a throttle actuator, a fuel injection device, and an ignition device included in the vehicle 10.

The first rotating machine MG1 and the second rotating machine MG2 are rotating electric machines having a function of an electric motor (motor) and a function of an electric generator (generator) and are so-called motor generators. The first rotating machine MG1 and the second rotating machine MG2 are each connected to a battery 54 serving as an electric storage device disposed in the vehicle 10 via an inverter 52 disposed in the vehicle 10, and the electronic control device 90 described later controls the inverter 52 to control an MG1 torque Tg and an MG2 torque Tm that are respective output torques of the first rotating machine MG1 and the second rotating machine MG2. The output torque of each of the rotating machines is defined as a power running torque when the torque is a positive torque i.e., in the acceleration direction and is a regenerative torque when the torque is a negative torque i.e., in the deceleration direction. The battery 54 is an electric storage device giving and receiving an electric power to and from each of the first rotating machine MG1 and the second rotating machine MG2.

The power transmission device 16 includes an electric continuously variable transmission portion 20 and a mechanical step-variable transmission portion 22 arranged in series on a common axial center in a casing 18 serving as a non-rotating member attached to a vehicle body. The electric continuously variable transmission portion 20 is coupled to the engine 12 directly or indirectly via a damper not shown and the like. The mechanical step-variable transmission portion 22 is coupled to the output side of the electric continuously variable transmission portion 20. The power transmission device 16 includes a differential gear device 26 coupled to an output shaft 24 that is an output rotating member of the mechanical step-variable transmission portion 22, a pair of axles 28 coupled to the differential gear device 26, etc. In the power transmission device 16, a power output from the engine 12 and the second rotating machine MG2 is transmitted to the mechanical step-variable transmission portion 22 and transmitted from the mechanical step-variable transmission portion 22 via the differential gear device 26 etc. to the drive wheels 14. The electric continuously variable transmission portion 20, and the mechanical step-variable transmission portion 22 will hereinafter be referred to as a continuously variable transmission portion 20, and a step-variable transmission portion 22, respectively. The term "power" is synonymous with torque or force if not particularly distinguished. The continuously variable transmission portion 20, the step-variable transmission portion 22, etc. are configured substantially symmetrically about the common axial center and have lower halves from the axial center not shown in Fig. 1. The common axial center is the axial center of a crankshaft of the engine 12, a coupling shaft 34 described later, etc.

The continuously variable transmission portion 20 includes the first rotating machine MG1 and a differential mechanism 32 serving as a power dividing mechanism mechanically dividing the power of the engine 12 to the first rotating machine MG1 and an intermediate transmitting member 30 that is an output rotating member of the continuously variable transmission portion 20. The second rotating machine MG2 is coupled to the intermediate transmitting member 30 in a power transmittable manner. The continuously variable transmission portion 20 is an electric continuously variable transmission in which a differential state of the differential mechanism 32 is controlled by controlling an operating state of the first rotating machine MG1. The first rotating machine MG1 is a rotating machine configured to control an engine rotation speed Ne that is a rotation speed of the engine 12, for example, a rotating machine operated to raise the engine rotation speed Ne. The second rotating machine MG2 is a rotating machine coupled to the drive wheels 14 in a power transmittable manner. The power transmission device 16 transmits the power of the power source to the drive wheels 14. Controlling the operating state of the first rotating machine MG1 means providing an operation control of the first rotating machine MG1.

The differential mechanism 32 is made up of a single pinion type planetary gear device and includes a sun gear S0, a carrier CA0, and a ring gear R0. The engine 12 is coupled to the carrier CA0 via the coupling shaft 34 in a power transmittable manner, the first rotating machine MG1 is coupled to the sun gear S0 in a power transmittable manner, and the second rotating machine MG2 is coupled to the ring gear R0 in a power transmittable manner. In the differential mechanism 32, the carrier CA0 functions as an input element, the sun gear S0 functions as a reaction element, and the ring gear R0 functions as an output element.

The step-variable transmission portion 22 is a mechanical transmission mechanism serving as a step-variable transmission constituting a portion of a power transmission path between the intermediate transmitting member 30 and the drive wheels 14, i.e., a mechanical transmission mechanism constituting a portion of a power transmission path between the continuously variable transmission portion 20 and the drive wheels 14. The intermediate transmitting member 30 also functions as an input rotating member of the step-variable transmission portion 22. Since the second rotating machine MG2 is coupled to the intermediate transmitting member 30 in an integrally rotating manner, or since the engine 12 is coupled to the input side of the continuously variable transmission portion 20, the step-variable transmission portion 22 is a transmission constituting a portion of a power transmission path between the power source (the second rotating machine MG2 or the engine 12) and the drive wheels 14. The intermediate transmitting member 30 is a power transmitting member for transmitting the power of the power source to the drive wheels 14. The step-variable transmission portion 22 is a known planetary gear type automatic transmission including, for example, a plurality of planetary gear devices such as a first planetary gear device 36 and a second planetary gear device 38, and a plurality of engagement devices such as a clutch C1, a clutch C2, a brake B1, and a brake B2 as well as a one-way clutch F1. The clutch C1, the clutch C2, the brake B1, and the brake B2 will hereinafter simply be referred to as engagement devices CB if they are not particularly distinguished.

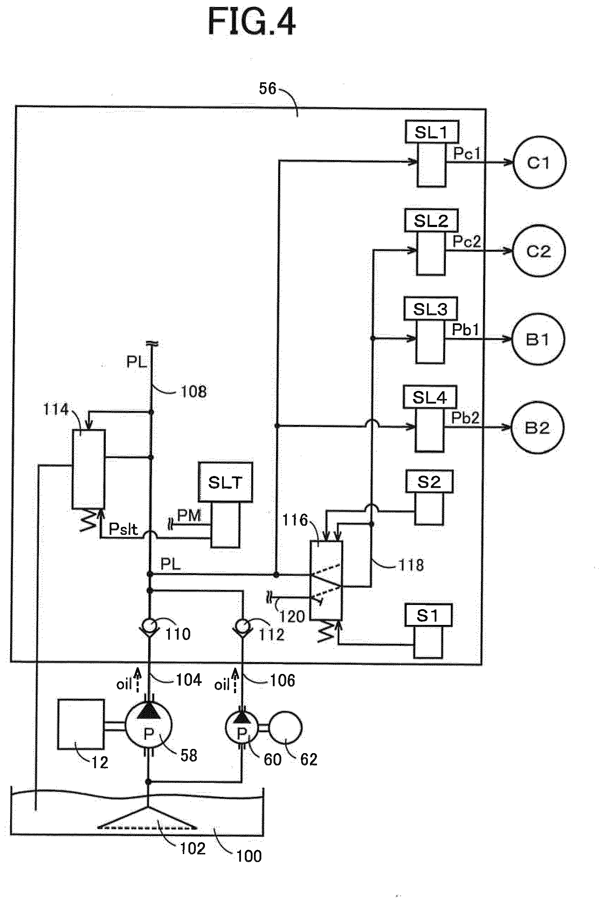

The engagement devices CB are hydraulic friction engagement devices made up of multiplate or single-plate type clutches and brakes pressed by hydraulic actuators, band brakes fastened by hydraulic actuators, etc. Operation states of the engagement devices CB, i.e., an engagement state and release state thereof are switched in accordance with each oil pressure of Pc1, Pc2, Pb1 and Pb2 (see Fig. 4 described later) for the engagement devices CB output from a hydraulic control circuit 56 included in the vehicle 10.

In the step-variable transmission portion 22, rotating elements of the first planetary gear device 36 and the second planetary gear device 38 include those coupled to each other or coupled to the intermediate transmitting member 30, the casing 18, or the output shaft 24, directly or indirectly via the engagement devices CB and the one-way clutch F1. The rotating elements of the first planetary gear device 36 are a sun gear S1, a carrier CA1, and a ring gear R1, and the rotating elements of the second planetary gear device 38 are a sun gear S2, a carrier CA2, and a ring gear R2.

The step-variable transmission portion 22 is a step-variable transmission in which any gear position is formed out of a plurality of gear shift positions (also referred to as gear positions) different in speed change ratio (also referred to as gear ratio) γat (=AT input rotation speed Ni/output rotation speed No) in accordance with engagement of predetermined engagement devices out of the plurality of engagement devices. Therefore, in the step-variable transmission portion 22, the plurality of engagement devices is selectively engaged to switch the gear position, i.e., to perform a shift. The step-variable transmission portion 22 is a step-variable automatic transmission in which each of the gear positions is formed. In this example, the gear positions formed by the step-variable transmission portion 22 are referred to as AT gear positions. The AT input rotation speed Ni is an input rotation speed of the step-variable transmission portion 22, which is a rotation speed of the input rotating member of the step-variable transmission portion 22, has the same value as a rotation speed of the intermediate transmitting member 30, and has the same value as an MG2 rotation speed Nm, which is a rotation speed of the second rotating machine MG2. That is, the AT input rotation speed Ni can be represented by the MG2 rotation speed Nm. The output rotation speed No is a rotation speed of the output shaft 24, which is an output rotation speed of the step-variable transmission portion 22, and is also an output rotation speed of a composite transmission 40 that is a general transmission acquired by combining the continuously variable transmission portion 20 and the step-variable transmission portion 22. The composite transmission 40 is a transmission constituting a portion of the power transmission path between the engine 12 and the drive wheels 14.

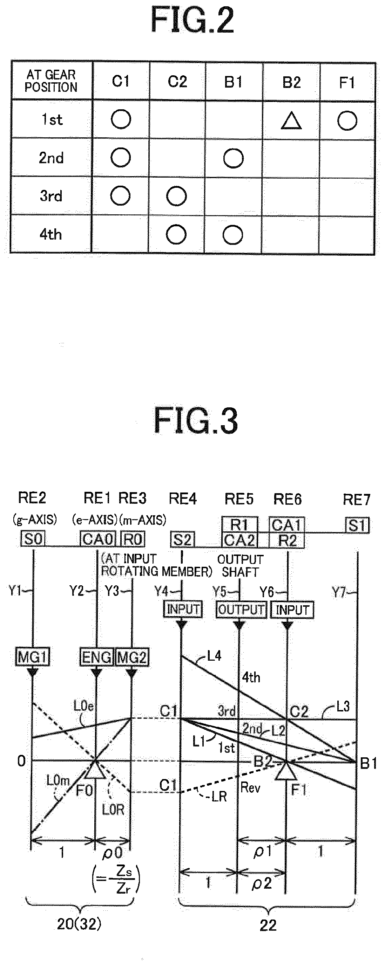

For example, as shown in an engagement operation table of Fig. 2, the step-variable transmission portion 22 has four forward AT gear positions from an AT first gear position ("1st" in Fig. 2) to an AT fourth gear position ("4th" in Fig. 2) formed as the AT gear positions. The AT first gear position has the largest speed change ratio yat, and the speed change ratio yat becomes smaller at the AT gear positions on the higher side. The engagement operation table of Fig. 2 summarizes a relationship between the AT gear positions and the operation states of the plurality of engagement devices. Therefore, the engagement operation table of Fig. 2 summarizes a relationship between the AT gear positions and predetermined engagement devices that are engagement devices engaged at the respective AT gear positions. In Fig. 2, a circle indicates engagement of a corresponding engagement device, a triangle indicates engagement when a corresponding AT gear position is achieved by engine braking or coast downshift, and a blank indicates release.

In the step-variable transmission portion 22, the electronic control device 90 described later switches the AT gear position formed in accordance with an accelerator operation of a driver, a vehicle speed V, etc., i.e., selectively forms each of a plurality of AT gear positions. For example, the step-variable transmission portion 22 performs a so-called clutch-to-clutch shift control in which a shift is performed by making a change of the engagement devices CB to be engaged, i.e., a shift is performed by switching engagement to release of certain engagement devices CB and switching release to engagement of another engagement devices CB. In this example, a downshift from the AT second gear position to the AT first gear position is represented as a 2→1 downshift, for example. The same applies to other upshifts and downshifts.

The vehicle 10 further includes a one-way clutch F0, an MOP 58 that is a mechanical oil pump, an EOP 60 that is an electric oil pump, etc.

The one-way clutch F0 is a lock mechanism configured to fix the carrier CA0 such that the carrier CA0 is not rotated. Therefore, the one-way clutch F0 is a lock mechanism configured to fix to the casing 18 the coupling shaft 34 that is coupled to the crankshaft of the engine 12 and that rotates integrally with the carrier CA0. In the one-way clutch F0, one of two relatively rotatably members is integrally coupled to the coupling shaft 34, and the other member is integrally coupled to the casing 18. The one-way clutch F0 idles in a positive rotation direction that is a rotation direction during operation of the engine 12 and automatically engages in the rotation direction opposite to the direction during operation of the engine 12. Therefore, during idling of the one-way clutch F0, the engine 12 is made relatively rotatable with respect to the casing 18. On the other hand, when the one-way clutch F0 is engaged, the engine 12 is made relatively non-rotatable with respect to the casing 18. Therefore, the engine 12 is fixed to the casing 18 by the engagement of the one-way clutch F0. In this way, the one-way clutch F0 allows the carrier CA0 to rotate in the positive rotation direction that is the rotation direction of the engine 12 and prevents the carrier CA0 from rotating in the negative rotation direction. Thus, the one-way clutch F0 is a lock mechanism configured to allow the rotation of the engine 12 in the positive rotation direction and prevent the rotation thereof in the negative rotation direction.

The MOP 58 is coupled to the coupling shaft 34 and is rotated together with the rotation of the engine 12 to discharge a hydraulic oil OIL used in the power transmission device 16. For example, the MOP 58 is rotated by the engine 12 to discharge the hydraulic oil OIL. The EOP 60 is rotated to discharge the hydraulic oil OIL by a motor 62 dedicated to the EOP 60 included in the vehicle 10. The hydraulic oil OIL discharged by the MOP 58 and the EOP 60 is supplied to the hydraulic control circuit 56 (see Fig. 4 described later). The engagement devices CB have the operation states switched by the respective oil pressures Pc1, Pc2, Pb1, Pb2 of the hydraulic oil OIL regulated by the hydraulic control circuit 56.

Fig. 3 is a collinear chart representative of a relative relationship of rotation speeds of the rotating elements in the continuously variable transmission portion 20 and the step-variable transmission portion 22. In Fig. 3, three vertical lines Y1, Y2, Y3 corresponding to the three rotating elements of the differential mechanism 32 constituting the continuously variable transmission portion 20 are a g-axis representative of the rotation speed of the sun gear S0 corresponding to a second rotating element RE2, an e-axis representative of the rotation speed of the carrier CA0 corresponding to a first rotating element RE1, and an m-axis representative of the rotation speed of the ring gear R0 corresponding to a third rotating element RE3 (i.e., the input rotation speed of the step-variable transmission portion 22) in order from the left side. Four vertical lines Y4, Y5, Y6, Y7 of the step-variable transmission portion 22 are axes respectively representative of the rotation speed of the sun gear S2 corresponding to a fourth rotating element RE4, the rotation speed of the ring gear R1 and the carrier CA2 coupled to each other corresponding to a fifth rotating element RE5 (i.e., the rotation speed of the output shaft 24), the rotation speed of the carrier CA1 and the ring gear R2 coupled to each other corresponding to a sixth rotating element RE6, and the rotation speed of the sun gear S1 corresponding to a seventh rotating element RE7 in order from the left. Intervals between the vertical lines Y1, Y2, Y3 are determined in accordance with a gear ratio p0 of the differential mechanism 32. Intervals among the vertical lines Y4, Y5, Y6, Y7 are determined in accordance with gear ratios ρ1, ρ2 of the first and second planetary gear devices 36, 38. When an interval between the sun gear and the carrier is set to an interval corresponding to "1" in the relationship between vertical axes of the collinear chart, an interval corresponding to a gear ratio ρ (=the number Zs of teeth of the sun gear/the number Zr of teeth of the ring gear) of the planetary gear device is set between the carrier and the ring gear.

As shown in the collinear chart of Fig. 3, in the differential mechanism 32 of the continuously variable transmission portion 20, the engine 12 (see "ENG" in Fig. 3) is coupled to the first rotating element RE1; the first rotating machine MG1 (see "MG1" in Fig. 3) is coupled to the second rotating element RE2; the second rotating machine MG2 (see "MG2" in Fig. 3) is coupled to the third rotating element RE3 rotating integrally with the intermediate transmitting member 30; and therefore, the rotation of the engine 12 is transmitted via the intermediate transmitting member 30 to the step-variable transmission portion 22. In the continuously variable transmission portion 20, the relationship between the rotation speed of the sun gear S0 and the rotation speed of the ring gear R0 is indicated by straight lines L0e, L0m and L0R crossing the vertical line Y2.

In the step-variable transmission portion 22, the fourth rotating element RE4 is selectively coupled via the clutch C1 to the intermediate transmitting member 30; the fifth rotating element RE5 is coupled to the output shaft 24; the sixth rotating element RE6 is selectively coupled via the clutch C2 to the intermediate transmitting member 30 and selectively coupled via the brake B2 to the casing 18; and the seventh rotating element RE7 is selectively coupled via the brake B1 to the casing 18. In the step-variable transmission portion 22, the rotation speeds of the output shaft 24 at "1st", "2nd", "3rd", "4th", and "Rev" are indicated by respective straight lines L1, L2, L3, L4, LR crossing the vertical line Y5 in accordance with engagement/release control of the engagement devices CB.

The straight line L0e and the straight lines L1, L2, L3, L4 indicated by solid lines in Fig. 3 indicate the relative rotating speeds of the rotating elements during forward running in a hybrid running mode enabling a hybrid running in which at least the engine 12 is used as a power source for running. In this hybrid running mode, when a reaction torque, i.e., a negative torque from the first rotating machine MG1, is input to the sun gear S0 during positive rotation of the sun gear S0 while the engine torque Te is input to the carrier CA0 in the differential mechanism 32, an engine direct transmission torque Td (=Te/(1+ρ0)=-(1/ρ0)×Tg) appears in the ring gear R0 as a positive torque in positive rotation. A combined torque of the engine direct transmission torque Td and the MG2 torque Tm is transmitted as the drive torque of the vehicle 10 in a forward direction depending on a required drive force to the drive wheels 14 via the step-variable transmission portion 22 in which one of AT gear positions out of the AT first to AT fourth gear positions is formed. In this case, the first rotating machine MG1 functions as an electric generator generating a negative torque while positive rotation. A generated electric power Wg of the first rotating machine MG1 is stored in the battery 54 or consumed by the second rotating machine MG2. The second rotating machine MG2 outputs the MG2 torque Tm by using all or a portion of the generated electric power Wg or using the electric power from the battery 54 in addition to the generated electric power Wg.

The straight line L0m indicated by a dashed-dotted line in Fig. 3 and the straight lines L1, L2, L3, and L4 indicated by solid lines in Fig. 3 indicate the relative rotating speeds of the respective rotating elements during forward running in a motor running mode enabling a motor running in which at least the second rotating machine MG2 is used as a power source for running between the first rotating machine MG1 and the second rotating machine MG2 with the operation of the engine 12 stopped. The motor running in forward running in the motor running mode includes a single drive motor running in which only the second rotating machine MG2 is used as the power source for running and a double drive motor running in which both the first rotating machine MG1 and the second rotating machine MG2 are used as the power source. In the single drive motor running, the rotation speed of the carrier CA0 is set to zero and the MG2 torque Tm is input to the ring gear R0 as a positive torque in positive rotation. In this case, the first rotating machine MG1 coupled to the sun gear S0 is brought into a no-load state and is idled in negative rotation. In the single drive motor running, the one-way clutch F0 is released, and the coupling shaft 34 is not fixed to the casing 18. In the double drive motor running, when the MG1 torque Tg is input to the sun gear S0 as a negative torque in negative rotation while the rotation speed of the carrier CA0 is set to zero, the one-way clutch F0 is automatically engaged so that the rotation of the carrier CA0 is prevented in the negative rotation direction. While the carrier CA0 is non-rotatably fixed by the engagement of the one-way clutch F0, a reaction torque due to the MG1 torque Tg is input to the ring gear R0. Additionally, in the double drive motor running, the MG2 torque Tm is input to the ring gear R0 as in the single drive motor running. In the forward running in the motor running mode, the engine 12 is not driven so that the engine rotation speed Ne is made zero, and at least the MG2 torque Tm of the MG1 torque Tg and the MG2 torque Tm is transmitted as the drive torque of the vehicle 10 in the forward direction to the drive wheels 14 via the step-variable transmission portion 22 having any AT gear position formed out of the AT first to AT fourth gear positions. In the forward running in the motor running mode, the MG1 torque Tg is a power running torque that is a negative torque in negative rotation, and the MG2 torque Tm is a power running torque that is a positive torque in positive rotation.

The straight lines L0R and LR indicated by broken lines in Fig. 3 indicate the relative rotating speeds of the rotating elements in reverse running in the motor running mode. In the reverse running in this motor running mode, the MG2 torque Tm is input to the ring gear R0 as a negative torque while the second rotating machine MG2 rotates in negative rotation, and the MG2 torque Tm is transmitted as the drive torque to run the vehicle 10 in the reverse (backward) direction to the drive wheels 14 via the step-variable transmission portion 22 in which the AT first gear position is formed. The vehicle 10 can perform the reverse running when the electronic control device 90 described later causes the second rotating machine MG2 to output a reverse MG2 torque Tm while a forward lower-side AT gear position, for example, the AT first gear position, is formed. The reverse MG2 torque Tm has an opposite sign of positive/negative to a forward MG2 torque Tm which is output from the second rotating machine MG2 during forward running. In the reverse running in the motor running mode, the MG2 torque Tm is a running torque that is a negative torque in a negative rotation direction. Even in the hybrid running mode, the reverse running can be performed as in the motor running mode since the second rotating machine MG2 can rotate in the negative rotation direction as indicated by the straight line L0R.

In the power transmission device 16, the continuously variable transmission portion 20 is configured as an electric transmission mechanism including the differential mechanism 32 having the three rotating elements, which are the carrier CA0 as the first rotating element RE1 to which the engine 12 is coupled in a power transmittable manner, the sun gear S0 as the second rotating element RE2 to which the first rotating machine MG1 is coupled in a power transmittable manner, and the ring gear R0 as the third rotating element RE3 to which the intermediate transmitting member 30 is coupled in a power transmittable manner, such that the differential state of the differential mechanism 32 is controlled by controlling the operating state of the first rotating machine MG1. The differential mechanism 32 constitutes a portion of the power transmission device 16. From another viewpoint, the third rotating element RE3 having the intermediate transmitting member 30 coupled thereto in a power transmittable manner is the third rotating element RE3 to which the second rotating machine MG2 is coupled in a power transmittable manner. Therefore, the power transmission device 16 has the continuously variable transmission portion 20 configured to have the differential mechanism 32 to which the engine 12 is coupled in a power transmittable manner and the first rotating machine MG1 coupled to the differential mechanism 32 in a power transmittable manner, such that the differential state of the differential mechanism 32 is controlled by controlling the operating state of the first rotating machine MG1. The continuously variable transmission portion 20 is operated as an electric continuously variable transmission to change a speed change ratio γ0 (=Ne/Nm) that is a ratio of the engine rotation speed Ne having the same value as the rotation speed of the coupling shaft 34 serving as an input rotating member of the continuously variable transmission portion 20 to the MG2 rotation speed Nm that is the rotation speed of the intermediate transmitting member 30 serving as the output rotating member of the continuously variable transmission portion 20.

For example, in the hybrid running mode, when the rotation speed of the sun gear S0 is increased or decreased by controlling a rotation speed of the first rotating machine MG1 with respect to the rotation speed of the ring gear R0 restrained by the rotation of the drive wheels 14 since the AT gear position is formed in the step-variable transmission portion 22, the rotation speed of the carrier CA0, i.e., the engine rotation speed Ne, is increased or decreased. Therefore, in the hybrid running, the engine 12 can be operated at an efficient operating point. Thus, the composite transmission 40 is formed by the continuously variable transmission portion 20 and the step-variable transmission portion 22 arranged in series and serves as a continuously variable transmission as a whole.

Alternatively, the composite transmission 40 can serve as a step-variable transmission as a whole when the continuously variable transmission portion 20 performs shifting as in a step-variable transmission. In other words, in the composite transmission 40, the step-variable transmission portion 22 and the continuously variable transmission portion 20 can be controlled so as to selectively establish a plurality of gear positions different in a speed change ratio γt (=Ne/No) indicative of a value of a ratio of the engine rotation speed Ne to the output rotation speed No. In this example, the gear position established in the composite transmission 40 is referred to as a simulated gear position. The speed change ratio γt is a total speed change ratio formed by the continuously variable transmission portion 20 and the step-variable transmission portion 22 arranged in series and has a value obtained by multiplying the speed change ratio γ0 of the continuously variable transmission portion 20 by the speed change ratio γat of the step-variable transmission portion 22 (γt=γ0×γat).

For example, each of the simulated gear positions is established as a combination of one of the AT gear positions of the step-variable transmission portion 22 and at least one value of the speed change ratio γ0 of the continuously variable transmission portion 20. That is, at least one simulated gear position is formed with each AT gear position. For example, the simulated gear position is defined in advance such that simulated first to third gear positions are established for the AT first gear position, that simulated fourth to sixth gear positions are established for the AT second gear position, that simulated seventh to ninth gear positions are established for the AT third gear position, and that a simulated tenth gear position is established for the AT fourth gear position. In the composite transmission 40, the continuously variable transmission portion 20 is controlled to attain the engine rotation speed Ne at which a predetermined speed change ratio γt is achieved for the output rotation speed No, so that different simulated gear positions are established at one AT gear position. Additionally, in the composite transmission 40, the continuously variable transmission portion 20 is controlled in accordance with switching of the AT gear position so that the simulated gear position is switched.

Returning to Fig. 1, the vehicle 10 includes the electronic control device 90 as a controller including a control device of the vehicle 10 related to control of the engine 12, the continuously variable transmission portion 20, the step-variable transmission portion 22, etc. Therefore, Fig. 1 is a diagram showing an input/output system of the electronic control device 90 and is a functional block diagram for explaining a main portion of a control function of the electronic control device 90. The electronic control device 90 is configured to include a so-called microcomputer including a CPU, a RAM, a ROM, and an I/O interface, for example, and the CPU executes signal processes in accordance with a program stored in advance in the ROM, while utilizing a temporary storage function of the RAM, to provide various controls of the vehicle 10. The electronic control device 90 may be configured separately for the engine control, the shift control, etc., as needed.

The electronic control device 90 is supplied with various signals etc. (e.g., the engine rotation speed Ne, the output rotation speed No corresponding to the vehicle speed V, an MG1 rotation speed Ng that is the rotation speed of the first rotating machine MG1, the MG2 rotation speed Nm that is the AT input rotation speed Ni, an EOP rotation speed Neop that is rotation speed of the EOP 60, an accelerator opening degree θacc defined as a driver's accelerating operation amount representative of a magnitude of a driver's accelerating operation, a throttle valve opening degree θth that is an opening degree of an electronic throttle valve, a battery temperature THbat, a battery charge/discharge current Ibat, and a battery voltage Vbat of the battery 54, a hydraulic oil temperature THoil that is a temperature of the hydraulic oil OIL, an engine cooling water temperature THeng that is a temperature of cooling water of the engine 12, an operation position POSsh of a shift lever 89 serving as a shift operation member included in the vehicle 10) based on detection values from various sensors etc. included in the vehicle 10 (e.g., an engine rotation speed sensor 70, an output rotation speed sensor 72, an MG1 rotation speed sensor 74, an MG2 rotation speed sensor 76, an EOP rotation speed sensor 77, an accelerator opening degree sensor 78, a throttle valve opening degree sensor 80, a battery sensor 82, an oil temperature sensor 84, an engine water temperature sensor 86, and a shift position sensor 88). The electronic control device 90 calculates a state-of-charge value SOC [%] as an index indicative of a state of charge of the battery 54 based on the battery charge/discharge current Ibat and the battery voltage Vbat, for example.

The electronic control device 90 outputs to the devices included in the vehicle 10 (e.g., the engine control device 50, the inverter 52, the hydraulic control circuit 56, and the motor 62) various command signals (e.g., an engine control command signal Se for controlling the engine 12, a rotating machine control command signal Smg for controlling each of the first rotating machine MG1 and the second rotating machine MG2, an oil pressure control command signal Sat for controlling the operation state of the engagement devices CB, and an EOP control command signal Seop for controlling an operation of the EOP 60). The oil pressure control command signal Sat is also an oil pressure control command signal for controlling the shift of the step-variable transmission portion 22 and is a command signal for driving solenoid valves SL1 to SL4 etc. (see Fig. 4 described later) regulating the oil pressures Pc1, Pc2, Pb1, Pb2 supplied to respective hydraulic actuators of the engagement devices CB, for example. The electronic control device 90 sets oil pressure command values corresponding to the values of the oil pressures Pc1, Pc2, Pb1, Pb2 and outputs drive currents or drive voltages corresponding to the oil pressure command values to the hydraulic control circuit 56.

Fig. 4 is a diagram for explaining the hydraulic control circuit 56 and is a diagram for explaining an oil pressure source supplying the hydraulic oil OIL to the hydraulic control circuit 56. In Fig. 4, the MOP 58 and the EOP 60 are disposed in parallel due to a configuration of oil passages through which the hydraulic oil OIL flows. The MOP 58 and the EOP 60 each discharge the hydraulic oil OIL used as a source of oil pressure for switching the operation state of each of the engagement devices CB and supplying a lubricating oil to the portions of the power transmission device 16. The MOP 58 and the EOP 60 each suck up the hydraulic oil OIL flowing back to an oil pan 100 disposed in a lower portion of the casing 18, through a strainer 102 that is a common suction port, and discharge the hydraulic oil OIL to respective discharge oil passages 104, 106. The discharge oil passages 104, 106 are each coupled to an oil passage included in the hydraulic control circuit 56, for example, a line pressure oil passage 108 that is an oil passage through which a line pressure PL flows. The discharge oil passage 104 of the hydraulic oil OIL discharged from the MOP 58 is coupled to the line pressure oil passage 108 via an MOP check valve 110 included in the hydraulic control circuit 56. The discharge oil passage 106 of the hydraulic oil OIL discharged from the EOP 60 is coupled to the line pressure oil passage 108 via an EOP check valve 112 included in the hydraulic control circuit 56. The MOP 58 rotates together with the engine 12 to generate a hydraulic oil pressure. The EOP 60 can generate the hydraulic oil pressure regardless of the rotation state of the engine 12. The EOP 60 is operated during running in the motor running mode, for example.

The hydraulic control circuit 56 includes, in addition to the line pressure oil passage 108, the MOP check valve 110, and the EOP check valve 112 described above, a regulator valve 114, a switching valve 116, a supply oil passage 118, a discharge oil passage 120, the solenoid valves SLT, S1, S2, SL1 to SL4, etc.

The regulator valve 114 regulates the line pressure PL using the hydraulic oil OIL discharged by at least one of the MOP 58 and the EOP 60. The solenoid valve SLT is, for example, a linear solenoid valve, and is controlled by the electronic control device 90 to output to the regulator valve 114 a pilot pressure Pslt corresponding to an input torque etc. to the step-variable transmission portion 22. As a result, the line pressure PL is set to an oil pressure corresponding to the input torque etc. of the step-variable transmission portion 22. A source pressure input to the solenoid valve SLT is a modulator pressure PM regulated to a constant value by a modulator valve (not shown) using the line pressure PL as the source pressure, for example.

The switching valve 116 has an oil passage switched based on the oil pressures output from the solenoid valves S1, S2. The solenoid valves S1, S2 are both on-off solenoid valves, for example, and are each controlled by the electronic control device 90 to output the oil pressure to the switching valve 116. In the switching valve 116, when the oil pressure is output from the solenoid valve S2 and no oil pressure is output from the solenoid valve S1, the oil passage is switched to connect the line pressure oil passage 108 and the supply oil passage 118. In the switching valve 116, when the oil pressure is output from both the solenoid valves S1, S2, or no oil pressure is output from both the solenoid valves S1, S2, or the oil pressure is output from the solenoid valve S1 and no oil pressure is output from the solenoid valve S2, the oil passage is switched such that the oil passage is interrupted between the line pressure oil passage 108 and the supply oil passage 118 while the supply oil passage 118 is coupled to the discharge oil passage 120. The supply oil passage 118 is an oil passage through which the source pressure input to the solenoid valves SL2, SL3 flows. The discharge oil passage 120 is an atmospheric open oil passage for discharging the hydraulic oil OIL in the hydraulic control circuit 56 to the outside of the hydraulic control circuit 56, i.e., for returning the hydraulic oil OIL to the oil pan 100. For example, if the operation position POSsh of the shift lever 89 is set to a D operation position for selecting a forward running position of the composite transmission 40 enabling the forward running of the vehicle 10, the electronic control device 90 outputs to the hydraulic control circuit 56 the oil pressure control command signal Sat for causing the solenoid valve S2 to output the oil pressure and not causing the solenoid valve S1 to output the oil pressure. For example, if the operation position POSsh of the shift lever 89 is set to an R operation position for selecting a reverse running position of the composite transmission 40 enabling the reverse running of the vehicle 10, the electronic control device 90 outputs to the hydraulic control circuit 56 the oil pressure control command signal Sat for causing each of the solenoid valves S1, S2 to output the oil pressure.

The solenoid valves SL1 to SL4 are all linear solenoid valves, for example, and are controlled by the electronic control device 90 to output the oil pressures Pc1, Pc2, Pb1, Pb2 to the respective hydraulic actuators of the engagement devices CB. The solenoid valve SL1 regulates the oil pressure Pc1 supplied to the hydraulic actuator of the clutch C1 by using the line pressure PL as the source pressure. The solenoid valve SL2 regulates the oil pressure Pc2 supplied to the hydraulic actuator of the clutch C2 by using the line pressure PL passing through the switching valve 116 as the source pressure. The solenoid valve SL3 regulates the oil pressure Pb1 supplied to the hydraulic actuator of the brake B1 by using the line pressure PL passing through the switching valve 116 as the source pressure. The solenoid valve SL4 regulates the oil pressure Pb2 supplied to the hydraulic actuator of the brake B2 by using the line pressure PL as the source pressure.

Returning to Fig. 1, the electronic control device 90 includes an AT shift control means, i.e., an AT shift control portion 92, and a hybrid control means, i.e., a hybrid control portion 94, so as to implement the various controls in the vehicle 10.

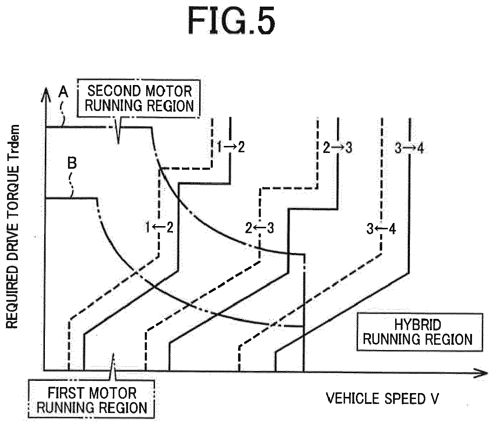

The AT shift control portion 92 determines a shift of the step-variable transmission portion 22 by using, for example, an AT gear position shift map as shown in Fig. 5, which is a relationship obtained empirically or through design and stored in advance, i.e., a predefined relationship, and provides the shift control of the step-variable transmission portion 22 as needed. In the shift control of the step-variable transmission portion 22, the AT shift control portion 92 outputs to the hydraulic control circuit 56 the oil pressure control command signal Sat for switching the engagement/release state of the engagement devices CB by the solenoid valves SL1 to SL4 so as to automatically switch the AT gear position of the step-variable transmission portion 22. The AT gear position shift map is a predetermined relationship having shift lines for determining the shift of the step-variable transmission portion 22 on two-dimensional coordinates using the vehicle speed V and a required drive torque Trdem as variables, for example. In this case, the output rotation speed No etc. may be used instead of the vehicle speed V, or a required drive force Frdem, the accelerator opening degree θacc, the throttle valve opening degree θth, etc. may be used instead of the required drive torque Trdem. The shift lines in the AT gear position shift map include upshift lines for determining an upshift as indicated by solid lines and downshift lines for determining a downshift as indicated by broken lines.

The hybrid control portion 94 has a function of an engine control means, i.e., an engine control portion, controlling the operation of the engine 12, and a function of a rotating machine control means, i.e., a rotating machine control portion, controlling the operations of the first rotating machine MG1 and the second rotating machine MG2 via the inverter 52, and provides a hybrid drive control etc. using the engine 12, the first rotating machine MG1, and the second rotating machine MG2 through these control functions. The hybrid control portion 94 calculates the required drive torque Trdem [Nm] at the drive wheels 14 in terms of a drive request amount by applying the accelerator opening degree θacc and the vehicle speed V to, for example, a drive request amount map that is a predefined relationship. The required drive force Frdem [N] at the drive wheels 14, a required drive power Prdem [W] at the drive wheels 14, a required AT output torque at the output shaft 24, etc. can be used as the drive request amount, instead of the required drive torque Trdem. The hybrid control portion 94 outputs the engine control command signal Se that is a command signal for controlling the engine 12 and the rotating machine control command signal Smg that is a command signal for controlling the first rotating machine MG1 and the second rotating machine MG2 so as to achieve the required drive power Prdem, for example.

For example, if the composite transmission 40 is operated as a continuously variable transmission as a whole by operating the continuously variable transmission portion 20 as a continuously variable transmission, the hybrid control portion 94 controls the engine 12 and controls the generated electric power Wg of the first rotating machine MG1 so as to attain the engine rotation speed Ne and the engine torque Te at which an engine power Pe achieving the required drive power Prdem is acquired in consideration of an engine optimum fuel consumption point etc., and thereby provides a continuously variable shift control of the continuously variable transmission portion 20 to change the speed change ratio γ0 of the continuously variable transmission portion 20. As a result of this control, the speed change ratio γt of the composite transmission 40 is controlled while the composite transmission 40 is operated as a continuously variable transmission.

For example, when the composite transmission 40 is operated as a step-variable transmission as a whole by controlling the continuously variable transmission portion 20 to perform as in a step-variable transmission, the hybrid control portion 94 uses a predetermined relationship, for example, a simulated gear position shift map, to determine the shift of the composite transmission 40 and provides the shift control of the continuously variable transmission portion 20 so as to selectively establish the plurality of simulated gear positions in coordination with the shift control of the AT gear position of the step-variable transmission portion 22 by the AT shift control portion 92. The plurality of simulated gear positions can be established by controlling the engine rotation speed Ne by the first rotating machine MG1 in accordance with the vehicle speed V so as to maintain the respective speed change ratios γt. The speed change ratio γt of each of the simulated gear positions may not necessarily be a constant value over the entire region of the vehicle speed V and may be changed in a predetermined region or may be limited by an upper limit, a lower limit, etc. of the rotation speed of the portions. As described above, the hybrid control portion 94 can provide the shift control in which the engine rotation speed Ne is changed as in a step-variable shift. A simulated step-variable shift control of causing the composite transmission 40 to perform a shift as in a step-variable transmission as a whole may be provided only in priority to the continuously variable shift control of operating the composite transmission 40 as a continuously variable transmission as a whole in the case that, for example, the driver selects a running mode placing emphasis on running performance such as a sports running mode etc. or the required drive torque Trdem is relatively large; however, the simulated step-variable shift control may basically be provided except when a predetermined restriction is placed on provision.

The hybrid control portion 94 selectively establishes the motor running mode or the hybrid running mode as a running mode depending on a running state to cause the vehicle 10 to run in each of the running modes. For example, the hybrid control portion 94 establishes the motor running mode when the required drive power Prdem is in a motor running region smaller than a predefined threshold value, and establishes the hybrid running mode when the required drive power Prdem is in a hybrid running region equal to or greater than the predefined threshold value. Even when the required drive power Prdem is in the motor running region, the hybrid control portion 94 establishes the hybrid running mode if the state-of-charge value SOC of the battery 54 is less than a predefined engine start threshold value. The engine start threshold value is a predefined threshold value for determining that the state-of-charge value SOC reaches a level at which the engine 12 must forcibly be started for charging the battery 54.

A dashed-dotted line A of Fig. 5 is a boundary line for switching the power source for running of the vehicle 10 between at least the engine 12 and at least the second rotating machine MG2 of the first rotating machine MG1 and the second rotating machine MG2. That is, the dashed-dotted line A of Fig. 5 is a boundary line between the hybrid running region and the motor running region for switching between the hybrid running and the motor running. A predefined relationship having the boundary line as indicated by the dashed-dotted line A of Fig. 5 is an example of a power source switching map defined by two-dimensional coordinates of the vehicle speed V and the required drive torque Trdem. This power source switching map is predefined together with the AT gear position shift map indicated by the solid lines and the broken lines also in Fig. 5, for example.

The motor running region includes a first motor running region that is a running region in which the required drive power Prdem can be achieved by the single drive motor running and a second motor running region that is a running region in which the required drive power Prdem can be achieved by the double drive motor running. The second motor running region is a running region in which the required drive power Prdem cannot be achieved by the single drive motor running, i.e., a running region in which the double drive motor running must be performed for achieving the required drive power Prdem. A dashed-two dotted line B of Fig. 5 is a boundary line between the first motor running region and the second motor running region. Basically, the hybrid control portion 94 causes the vehicle 10 to run in the motor running mode in which the single drive motor running is performed if the required drive power Prdem is in the first motor running region, and causes the vehicle 10 to run in the motor running mode in which the double drive motor running is performed if the required drive power Prdem is in the second motor running region. As described above, in the motor running mode, the hybrid control portion 94 can cause the vehicle 10 to run in the single drive motor running and can cause the vehicle 10 to run in the double drive motor running.

At the time of running in the motor running mode, the hybrid control portion 94 can cause the vehicle 10 to run in the double drive motor running even in the first motor running region. In the double drive motor running, as compared to achieving the required drive power Prdem only with the second rotating machine MG2, the first rotating machine MG1 and the second rotating machine MG2 can efficiently be operated by achieving the required drive power Prdem with the first rotating machine MG1 and the second rotating machine MG2 based on an operating efficiency of the first rotating machine MG1 and the second rotating machine MG2. Therefore, it is useful to cause the vehicle 10 to run in the double drive motor running in the first motor running region.

During running in the motor running mode in which the operation of the engine 12 is stopped, the EOP 60 is used as the oil pressure source supplying the hydraulic oil OIL to the hydraulic control circuit 56. During running in the in the motor running mode, the EOP 60 may not be able to discharge the hydraulic oil OIL at a flow rate required for the power transmission device 16. In such a case, it is conceivable that the motor running mode is changed to the hybrid running mode to use the MOP 58 as the oil pressure source. However, in such a form, the vehicle 10 cannot run in the motor running mode. When the EOP 60 is in a state of insufficient capacity in which the hydraulic oil OIL cannot be discharged at a flow rate required for the power transmission device 16 by the EOP 60 alone, it is desirable to ensure the required flow rate while the vehicle 10 is running in the motor running mode. The hydraulic oil OIL at the flow rate required for the power transmission device 16 has the same meaning as the hydraulic oil OIL at the flow rate required for the hydraulic control circuit 56. The hydraulic oil OIL at the flow rate required for the hydraulic control circuit 56 is, for example, the hydraulic oil OIL at the flow rate required for the engagement of the engagement devices CB, and the hydraulic oil OIL at the flow rate required for lubricating the portions of the power transmission device 16.

To implement a control function of ensuring the required flow rate while the vehicle is running in the motor running mode with the EOP 60 in the state of insufficient capacity, the electronic control device 90 further includes a state determining means, i.e., a state determining portion 96, and a required flow rate control means, i.e., a flow rate control portion 98.

The state determining portion 96 determines whether a running mode is the motor running mode. The state determining portion 96 also determines whether the EOP 60 is in the state of insufficient capacity.

If the EOP 60 has a failure, the EOP 60 cannot discharge the hydraulic oil OIL at the flow rate required for the hydraulic control circuit 56. The state determining portion 96 determines whether the EOP 60 is in the state of insufficient capacity, based on whether a failure has occurred so that the EOP 60 cannot discharge the hydraulic oil OIL, for example. The state determining portion 96 determines whether a failure has occurred so that the EOP 60 cannot discharge the hydraulic oil OIL, based on the EOP control command signal Seop and the EOP rotation speed Neop, for example.

The viscosity of the hydraulic oil OIL increases as the hydraulic oil temperature THoil decreases. Therefore, when the hydraulic oil temperature THoil is relatively low, the hydraulic oil OIL at the flow rate required for the hydraulic control circuit 56 cannot be ensured by the EOP 60 alone. The state determining portion 96 determines whether the EOP 60 is in the state of insufficient capacity, based on whether the hydraulic oil temperature THoil is lower than a predetermined oil temperature T1. The predetermined oil temperature T1 is, for example, a lower limit value of a predefined high oil temperature region of the hydraulic oil OIL in which the EOP 60 can discharge the hydraulic oil OIL at the flow rate required for the hydraulic control circuit 56.

In the continuously variable transmission portion 20, the engine rotation speed Ne can be raised by the first rotating machine MG1. If the EOP 60 is in the state of insufficient capacity, the MOP 58 is rotated by the first rotating machine MG1 to ensure the hydraulic oil at the flow rate required for the hydraulic control circuit 56 by using the MOP 58. When the double drive motor running is performed in the motor running mode, the engine rotation speed Ne cannot be raised by the first rotating machine MG1. To rotate the MOP 58 by the first rotating machine MG1 at the time of running in the motor running mode, the running must be performed in the single drive motor running.

If the state determining portion 96 determines that the EOP 60 is in the state of insufficient capacity when the state determining portion 96 determines that the running mode is the motor running mode, i.e., at the time of running in the motor running mode, the flow rate control portion 98 outputs to the hybrid control portion 94 a command to prohibit the double drive motor running to cause the vehicle 10 to run in the single drive motor running. Additionally, if the state determining portion 96 determines that the EOP 60 is in the state of insufficient capacity at the time of running in the motor running mode, the flow rate control portion 98 controls the first rotating machine MG1 to rotate the MOP 58 so that the MOP 58 discharges the hydraulic oil OIL at the flow rate required for the hydraulic control circuit 56. In this way, if the state determining portion 96 determines that the EOP 60 is in the state of insufficient capacity at the time of running in the motor running mode, the flow rate control portion 98 causes the MOP 58 to discharge the hydraulic oil OIL at the flow rate required for engagement of the engagement devices CB. The flow rate control portion 98 outputs to the inverter 52 the rotating machine control command signal Smg for increasing the MG1 rotation speed Ng so as to raise rotation speed of the MOP 58 rotating together with the engine 12 to drive the MOP 58. An MOP rotation speed Nmop is the rotation speed of the MOP 58 and is synonymous with the engine rotation speed Ne.

On the other hand, when the EOP 60 can be used in the motor running mode, the EOP 60 is used as the oil pressure source discharging the hydraulic oil OIL at the flow rate required for the hydraulic control circuit 56. If the hydraulic oil OIL is discharged at the required flow rate by the EOP 60, the double drive motor running may be performed in the motor running mode without problem.

If the state determining portion 96 determines that the EOP 60 is not in the state of insufficient capacity at the time of running in the motor running mode, the flow rate control portion 98 outputs to the hybrid control portion 94 a command to permit the double drive motor running. Additionally, if the state determining portion 96 determines that the EOP 60 is not in the state of insufficient capacity at the time of running in the motor running mode, the flow rate control portion 98 controls the motor 62 so that the EOP 60 discharges the hydraulic oil OIL at the flow rate required for the hydraulic control circuit 56. The flow rate control portion 98 outputs the EOP control command signal Seop for driving the EOP 60 to the motor 62.

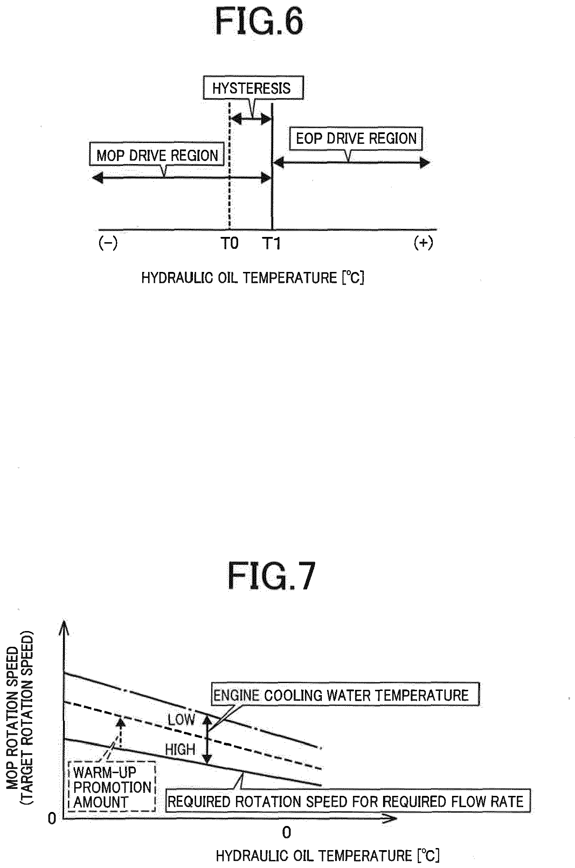

If it is determined that the EOP 60 is in the state of insufficient capacity since the hydraulic oil temperature THoil is lower than the predetermined oil temperature T1, the hydraulic oil OIL can be discharged at the flow rate required for the hydraulic control circuit 56 by the EOP 60 when the hydraulic oil temperature THoil becomes equal to or higher than the predetermined oil temperature T1. Therefore, the drive of the MOP 58 by the first rotating machine MG1 and the drive of the EOP 60 by the motor 62 are switched at the predetermined oil temperature T1 as a boundary. The detection value may vary in height in the process of increasing the hydraulic oil temperature THoil. Therefore, as shown in Fig. 6, a hysteresis is provided between an MOP drive region that is the region for driving the MOP 58 and an EOP drive region that is the region for driving the EOP 60. Specifically, the drive of the MOP 58 is switched to the drive of the EOP 60 at the predetermined oil temperature T1 indicated by a solid line of Fig. 6. The drive of the EOP 60 is switched to the drive of the MOP 58 at an oil temperature T0 indicated by a broken line of Fig. 6 on the lower oil temperature side relative to the predetermined oil temperature T1. The drive of the MOP 58 by the first rotating machine MG1 is accompanied by the rotation of the engine 12 in an operation stopped state and is therefore preferably switched to the drive of the EOP 60 as soon as possible. Thus, the region of hysteresis is provided on the lower oil temperature side relative to the predetermined oil temperature T1.

At the time of switching from the drive of the MOP 58 to the drive of the EOP 60 as described above, it is desirable that the hydraulic oil OIL at the required flow rate may be discharged by the EOP 60 immediately after the drive of the MOP 58 is stopped. Therefore, the EOP 60 is driven while the MOP 58 is driven, in preparation for causing the EOP 60 to discharge the hydraulic oil OIL at the required flow rate alone after the drive of the MOP 58 is stopped. If the state determining portion 96 determines that the EOP 60 is in the state of insufficient capacity since the hydraulic oil temperature THoil is lower than the predetermined oil temperature T1 at the time of running in the motor running mode, the flow rate control portion 98 controls the motor 62 to cause the EOP 60 to discharge the hydraulic oil OIL in addition to controlling the first rotating machine MG1 to cause the MOP 58 to discharge the hydraulic oil OIL. The form of performing the drive of the EOP 60 in addition to the drive of the MOP 58 may be a form implemented in the region of hysteresis as shown in Fig. 6 or may be a form implemented from a region on the lower oil temperature side relative to such a region of hysteresis.

When the MOP 58 is driven by the first rotating machine MG1 if the EOP 60 is in the state of insufficient capacity, when the hydraulic oil temperature THoil is lower, the viscosity of the hydraulic oil OIL becomes higher, and therefore, a required rotation speed for required flow rate, i.e., the rotation speed of the MOP 58 for discharging the hydraulic oil OIL at the flow rate required for the hydraulic control circuit 56, is made higher. Fig. 7 is a diagram showing the predefined required rotation speed. In Fig. 7, the required rotation speed indicated by a solid line is a target rotation speed of the MOP 58 when the MOP 58 is driven by the first rotating machine MG1. The target rotation speed of the MOP 58 is made higher when the hydraulic oil temperature THoil is lower. When the flow rate control portion 98 controls the first rotating machine MG1 to cause the MOP 58 to discharge the hydraulic oil OIL, the flow rate control portion 98 controls the first rotating machine MG1 such that the MOP rotation speed Nmop is made higher when the hydraulic oil temperature THoil is lower.

The drive of the MOP 58 by the first rotating machine MG1 rotates the engine 12 in the operation stopped state and therefore can increase a temperature of sliding portions such as a piston portion of the engine 12. When the temperature of the sliding portions of the engine 12 is increased, sliding resistance can be reduced, and therefore, the energy required for the next starting process of the engine 12 can be reduced. When warm-up of the engine 12 is taken into consideration, as shown in Fig. 7, the target rotation speed of the MOP 58 at the time of the drive of the MOP 58 by the first rotating machine MG1 is set to a rotation speed obtained by adding a warm-up promotion amount of the engine 12 to the required rotation speed indicated by the solid line. In Fig. 7, when the engine cooling water temperature THeng is lower, the warm-up promotion amount is made larger. Therefore, the target rotation speed of the MOP 58 is made higher when the engine cooling water temperature THeng is lower. When the flow rate control portion 98 controls the first rotating machine MG1 to cause the MOP 58 to discharge the hydraulic oil OIL, the flow rate control portion 98 controls the first rotating machine MG1 such that the MOP rotation speed Nmop is made higher when the engine cooling water temperature THeng is lower. If the warm-up of the engine 12 is completed, the warm-up promotion amount may be made zero to set the target rotation speed of the MOP 58 to the required rotation speed indicated by the solid line; however, even if the warm-up of the engine 12 is completed, the target rotation speed of the MOP 58 may be set to the rotation speed obtained by adding the warm-up promotion amount corresponding to the engine cooling water temperature THeng to the required rotation speed.

At the time of running in the motor running mode, the required driving power Prdem can be achieved by the single drive motor running or the double drive motor running in the first motor running region. In contrast, in the second motor running region, the required drive power Prdem cannot be achieved unless the double drive motor running is performed. Therefore, in the second motor running region, the required drive power Prdem cannot be achieved by the single drive motor running, and it is not appropriate to cause the vehicle 10 to run in the single drive motor running. Thus, when the double drive motor running is prohibited in the second motor running region, the running mode is changed to the hybrid running mode so that the MOP 58 is driven by the engine 12.

If the state determining portion 96 determines that the EOP 60 is in the state of insufficient capacity at the time of running in the motor running mode in the first motor running region, the flow rate control portion 98 outputs to the hybrid control portion 94 a command to prohibit the double drive motor running to cause the vehicle 10 to run in the single drive motor running. If the state determining portion 96 determines that the EOP 60 is in the state of insufficient capacity at the time of running in the motor running mode in the second motor running region, the flow rate control portion 98 prohibits the double drive motor running, and outputs to the hybrid control portion 94 a command to change the motor running mode to the hybrid running mode, instead of causing the vehicle 10 to run in the single drive motor running.

At the time of drive of the MOP 58 i.e., when the MOP 58 is rotated by the first rotating machine MG1, a reaction torque is generated as a negative torque in the ring gear R0 of the differential mechanism 32 in positive rotation with respect to the MG1 torque Tg. This reaction torque causes a drop in the drive torque of the vehicle 10. When the first rotating machine MG1 is controlled by the flow rate control portion 98 to rotate the MOP 58, the hybrid control portion 94 causes the second rotating machine MG2 to output a torque responsible for the reaction torque generated in the intermediate transmitting member 30 in association with the control of the first rotating machine MG1. When the MOP 58 is driven by the first rotating machine MG1, the hybrid control portion 94 outputs to the inverter 52 the rotating machine control command signal Smg for causing the second rotating machine MG2 to output an MG2 torque Tm responsible for the reaction torque generated in the intermediate transmitting member 30 in addition to the MG2 torque Tm used for the running in the motor running mode.

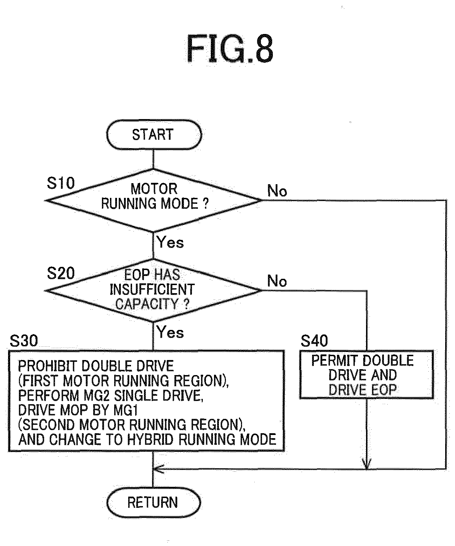

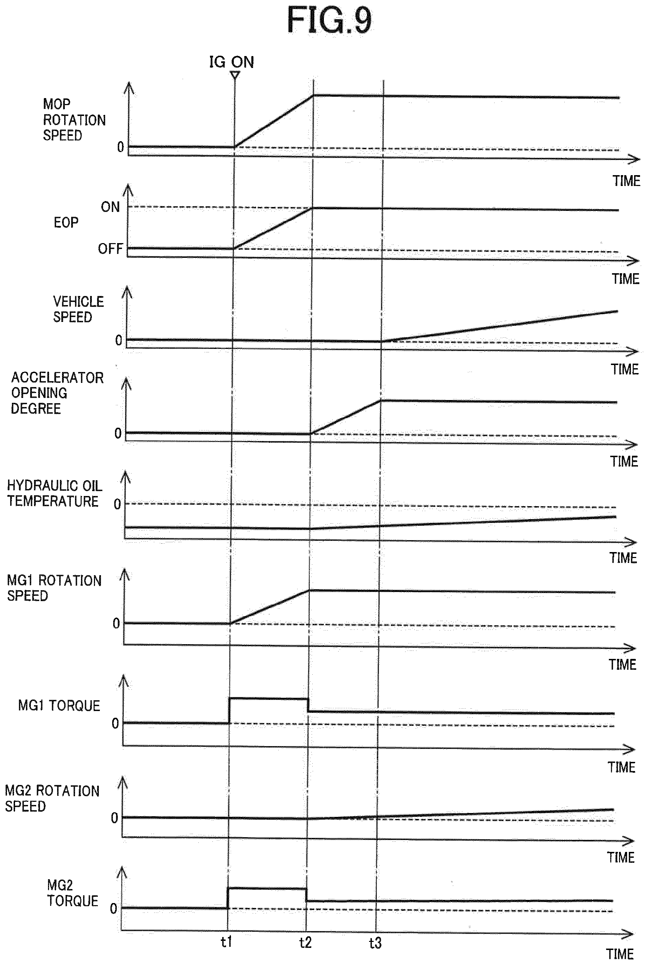

Fig. 8 is a flowchart for explaining a main portion of a control operation of the electronic control device 90, i.e., the control operation for appropriately ensuring the hydraulic oil OIL at the flow rate required for the hydraulic control circuit 56 even if the EOP 60 is in the state of insufficient capacity at the time of running in the motor running mode, and is executed repeatedly, for example. Fig. 9 is an example of a time chart when the control operation shown in the flowchart of Fig. 8 is performed.

In Fig. 8, first, at step (hereinafter, step is omitted) S10 corresponding to the function of the state determining portion 96, it is determined whether the running mode is the motor running mode. If the determination of S10 is negative, this routine is terminated. If the determination of S10 is affirmative, at S20 corresponding to the function of the state determining portion 96, it is determined whether the EOP 60 is in the state of insufficient capacity. If the determination of S20 is affirmative, at S30 corresponding to the function of the flow rate control portion 98, the double drive motor running is prohibited. If the double drive motor running is performed in the first motor running region as shown in Fig. 5, the single drive motor running is performed by the second rotating machine MG2 in the first motor running region. If the single drive motor running is performed in the first motor running region in the motor running mode, the single drive motor running by the second rotating machine MG2 is maintained in the first motor running region. In addition to running in the single drive motor running, the MOP 58 is driven by the first rotating machine MG1. If the EOP 60 has no failure, the EOP 60 may be driven in addition to the MOP 58. Then, the second motor running region as shown in Fig. 5 is eliminated. Therefore, when the double drive motor running is performed in the second motor running region, the motor running mode is changed to the hybrid running mode. In the hybrid running mode, the MOP 58 is driven by the engine 12. On the other hand, if the determination of S20 is negative, at S40 corresponding to the function of the flow rate control portion 98, the double drive motor running is permitted in the motor running mode. Therefore, the double drive motor running is performed as needed. For example, the double drive motor running is performed also in the first motor running region as shown in Fig. 5. The EOP 60 is used as the oil pressure source. Therefore, only the EOP 60 is driven. The double drive motor running may be performed only in the second motor running region as shown in Fig. 5.

Fig. 9 shows an embodiment in the case that the vehicle 10 starts running with ignition-on. This ignition-on is not an operation accompanied by cranking for starting the engine 12. The ignition-on is an operation of enabling the vehicle 10 to run, for example, an operation of bringing the vehicle 10 into a state in which the vehicle 10 can be started by turning on an accelerator. In the embodiment of Fig. 9, the engine 12 is not started with the ignition-on. In Fig. 9, time t1 indicates a time point when the ignition-on is performed. Since the hydraulic oil temperature THoil is low, the MOP rotation speed Nmop is raised by the first rotating machine MG1 (see time t1 to time t2). At this time, the engine rotation speed Ne is simultaneously raised. The MOP rotation speed Nmop is raised to the target rotation speed set by using a relationship as shown in Fig. 7, for example. In this embodiment, the EOP 60 is also operated together with the drive of the MOP 58. When the MOP 58 is driven by the first rotating machine MG1, the MG2 torque Tm responsible for the reaction torque generated in the intermediate transmitting member 30 is output from the second rotating machine MG2. The vehicle 10 is started in the motor running mode by turning on the accelerator, and the motor running of the vehicle 10 is performed (see t3 and later).

As described above, according to this example, if the EOP 60 is in the state of insufficient capacity at the time of running in the motor running mode, the double drive motor running is prohibited to cause the vehicle 10 to run in the single drive motor running, and the first rotating machine MG1 is controlled to rotate the MOP 58 so that the hydraulic oil OIL is discharged at the flow rate required for the power transmission device 16 by the MOP 58, so that the MOP 58 can be driven by the first rotating machine MG1 during running in the motor running mode. Therefore, even if the EOP 60 is in the state of insufficient capacity at the time of running in the motor running mode, the hydraulic oil OIL at the flow rate required for the power transmission device 16 can appropriately be ensured.

Since the drive of the MOP 58 by the first rotating machine MG1 is accompanied by an increase in the engine rotation speed Ne, the temperature of the sliding portions of the engine 12 is increased and the sliding resistance is reduced. As a result, the energy required for the next starting process of the engine 12 can be reduced.

According to this example, whether the EOP 60 is in the state of insufficient capacity is determined based on whether a failure has occurred so that the EOP 60 cannot discharge the hydraulic oil OIL, and therefore, even if the EOP 60 is in a failure state at the time of running in the motor running mode, the hydraulic oil OIL at the flow rate required for the power transmission device 16 can appropriately be ensured.

According to this example, whether the EOP 60 is in the state of insufficient capacity is determined based on whether the hydraulic oil temperature THoil is lower than the predetermined oil temperature T1, and therefore, even if the hydraulic oil temperature THoil is relatively low so that the flow rate of the hydraulic oil OIL becomes insufficient when the EOP 60 is used alone at the time of running in the motor running mode, the hydraulic oil OIL at the flow rate required for the power transmission device 16 can appropriately be ensured. If the hydraulic oil temperature THoil becomes equal to or higher than the predetermined oil temperature T1 and the EOP 60 can discharge the hydraulic oil OIL alone at the flow rate required for the power transmission device 16, the drive of the MOP 58 by the first rotating machine MG1 can be stopped.

According to this example, if the EOP 60 is in the state of insufficient capacity since the hydraulic oil temperature THoil is lower than the predetermined oil temperature T1, the hydraulic oil OIL is discharged by the EOP 60 in addition to the MOP 58, so that before the drive of the MOP 58 is stopped since the hydraulic oil temperature THoil becomes equal to or higher than the predetermined oil temperature T1, the hydraulic oil temperature THoil flowing through the EOP 60 can be raised and an output port of the EOP 60 can be filled with the hydraulic oil OIL. As a result, immediately after the drive of the MOP 58 is stopped, the hydraulic oil OIL can be discharged at the required flow rate by the EOP 60.

According to this example, if the EOP 60 is in the state of insufficient capacity at the time of running in the motor running mode in the first motor running region in which the required drive power Prdem can be achieved by the single drive motor running, the double drive motor running is prohibited to cause the vehicle 10 to run in the single drive motor running, so that the MOP 58 can be driven by the first rotating machine MG1 during running in the motor running mode.

According to this example, if the EOP 60 is in the state of insufficient capacity at the time of running in the motor running mode in the second motor running region in which the required drive power Prdem can be achieved by the double drive motor running, the double drive motor running is prohibited and the motor running mode is changed to the hybrid running mode to cause the vehicle 10 to run, so that the hydraulic oil OIL at the flow rate required for the power transmission device 16 can appropriately be ensured while achieving the large required drive power Prdem that cannot be achieved by the single drive motor running.

According to this example, when the first rotating machine MG1 is controlled to cause the MOP 58 to discharge the hydraulic oil OIL, the first rotating machine MG1 is controlled such that the MOP rotation speed Nmop is made higher when the hydraulic oil temperature THoil is lower, and therefore, the hydraulic oil OIL at the flow rate required for the power transmission device 16 can be ensured even at relatively low hydraulic oil temperature THoil.

According to this example, when the first rotating machine MG1 is controlled to cause the MOP 58 to discharge the hydraulic oil OIL, the first rotating machine MG1 is controlled such that the MOP rotation speed Nmop is made higher when the engine cooling water temperature THeng is lower, and therefore, an increase in temperature of the sliding portions of the engine 12 is promoted when the engine 12 is cooler, and the sliding resistance is easily reduced. Thus, the warm-up of the engine 12 can be promoted while reducing the electric power for driving the first rotating machine MG1. As a result, the energy required for the next starting process of the engine 12 can be reduced.

According to this example, if the EOP 60 is not in the state of insufficient capacity at the time of running in the motor running mode, the double drive motor running is permitted, and the motor 62 is controlled to cause the EOP 60 to discharge the hydraulic oil OIL at the flow rate required for the power transmission device 16, so that the first rotating machine MG1 and the second rotating machine MG2 can efficiently be operated in running in the motor running mode, and the hydraulic oil OIL at the flow rate required for the power transmission device 16 can appropriately be ensured. Additionally, the drive of the MOP 58 by the first rotating machine MG1 accompanied by an increase in the rotation speed Ne of the engine 12 in the operation stopped state is limited to when the EOP 60 has insufficient capacity, so that a deterioration in efficiency can be suppressed.

According to this example, when the first rotating machine MG1 is controlled to rotate the MOP 58, the second rotating machine MG2 outputs the torque responsible for the reaction torque generated in the intermediate transmitting member 30 in association with the control of the first rotating machine MG1, so that a drop in the drive torque of the vehicle 10 is suppressed when the MOP 58 is driven by the first rotating machine MG1.

According to this example, if the EOP 60 is in the state of insufficient capacity at the time of running in the motor running mode, the MOP 58 discharges the hydraulic oil OIL at the flow rate required for the engagement of the engagement devices CB included in the step-variable transmission portion 22, so that the each AT gear position of the step-variable transmission portion 22 is appropriately formed even if the EOP 60 is in the state of insufficient capacity. In other words, the shift of the step-variable transmission portion 22 is appropriately performed.

According to this example, if the EOP 60 is in the state of insufficient capacity at the time of running in the motor running mode, the MOP 58 discharges the hydraulic oil OIL at the flow rate required for the engagement of the engagement devices CB included in the power transmission device 16, so that the operation states of the engagement devices CB is appropriately switched even if the EOP 60 is in the state of insufficient capacity.

Although the example of the present invention has been described in detail with reference to the drawings, the present invention is also applicable in other forms.

For example, in the example described above, the one-way clutch F0 is illustrated as the lock mechanism configured to fix the carrier CA0 non-rotatably; however, the present invention is not limited to this form. The lock mechanism may be an engagement device, such as a dog clutch, a hydraulic friction engagement device such as a clutch and a brake, a dry engagement device, an electromagnetic friction engagement device, and a magnetic powder clutch, selectively connecting the coupling shaft 34 and the casing 18, for example.

In the example described above, the continuously variable transmission portion 20 may be a transmission mechanism which includes a clutch and/or a brake coupled to a rotating element of the differential mechanism 32 and of which differential action may be limited by control of the clutch or the brake. The differential mechanism 32 may be a double pinion type planetary gear device. The differential mechanism 32 may be a differential mechanism having multiple planetary gear devices coupled to each other and thus four or more rotating elements since multiple planetary gear devices are coupled to each another. The differential mechanism 32 may be a differential gear device in which the first rotating machine MG1 and the intermediate transmitting member 30 are respectively coupled to a pinion rotationally driven by the engine 12 and a pair of bevel gears meshing with the pinion. The differential mechanism 32 may be a mechanism having a configuration in which two or more planetary gear devices are mutually coupled by some rotating elements constituting the devices such that an engine, a rotating machine, and drive wheels are respectively coupled to the rotating elements of the planetary gear device.

In the example described above, the step-variable transmission portion 22 is illustrated as the automatic transmission constituting a portion of the power transmission path between the intermediate transmission member 30 and the drive wheels 14; however, the present invention is not limited to this form. For example, the automatic transmission may be an automatic transmission such as a synchronous meshing type parallel two-shaft automatic transmission, a known DCT (dual clutch transmission) that is the synchronous meshing type parallel two-shaft automatic transmission including two systems of input shafts, and a known mechanical continuously variable transmission such as a belt type continuously variable transmission. The automatic transmission may not be included. Therefore, the power transmission device 16 may not include the step-variable transmission portion 22 out of the continuously variable transmission portion 20 and the step-variable transmission portion 22. When a vehicle including the automatic transmission without an engagement device or a vehicle without the automatic transmission, a hydraulic oil used in the power transmission device is a working oil used for lubricating the power transmission device and cooling rotating machine, for example. The engagement device such as the hydraulic friction engagement device constituting the lock mechanism described above, a clutch and a brake limiting the differential action of the differential mechanism 32 described above, etc. are included in the engagement devices of the power transmission device. In short, the present invention is applicable to any hybrid vehicle including an engine, a power transmission device transmitting the power of the engine to drive wheels, a differential mechanism constituting a portion of the power transmission device, a lock mechanism configured to fix the engine non-rotatably, a mechanical oil pump rotated together with the rotation of the engine, an electric oil pump rotated by a motor dedicated to the electric oil pump, a first rotating machine configured to raise the rotation speed of the engine, and a second rotating machine coupled to the drive wheels in a power transmittable manner.

The above description is merely an embodiment and the present invention can be implemented in variously modified and improved forms based on the knowledge of those skilled in the art.

### REFERENCE SIGNS LIST

10: vehicle (hybrid vehicle)
12: engine
14: drive wheels
16: power transmission device
22: mechanical step-variable transmission portion (automatic transmission)
30: intermediate transmitting member (output rotating member)
32: differential mechanism
CA0: carrier (first rotating element)
S0: sun gear (second rotating element)
R0: ring gear (third rotating element)
58: MOP (mechanical oil pump)
60: EOP (electric oil pump)
62: motor (motor dedicated to an electric oil pump)
90: electronic control device (control device)
94: hybrid control portion
96: state determining portion
98: flow rate control portion
CB: engagement devices
F0: one-way clutch (lock mechanism)
MG1: first rotating machine
MG2: second rotating machine

## Claims

1. A control device (90) of a hybrid vehicle (10) including an engine (12), a first rotating machine (MG1), a power transmission device (16) transmitting a power of the engine to drive wheels (14), a differential mechanism (32) that constitutes a portion of the power transmission device and that includes a first rotating element (CA0) to which the engine is coupled in a power transmittable manner, a second rotating element (S0) to which the first rotating machine is coupled in a power transmittable manner, and a third rotating element (R0) to which an output rotating member (30) is coupled, a second rotating machine (MG2) coupled to the output rotating member in a power transmittable manner, a lock mechanism (F0) configured to fix the first rotating element non-rotatably, a mechanical oil pump (58) rotated together with the rotation of the engine to discharge a hydraulic oil (OIL) used in the power transmission device, and an electric oil pump (60) rotated by a motor (62) dedicated to the electric oil pump to discharge the hydraulic oil, the control device comprising:
a hybrid control portion (94) causing the hybrid vehicle to run in a single drive motor running using only the second rotating machine as a power source, or causing the hybrid vehicle to run in a double drive motor running using both the first rotating machine and the second rotating machine as the power sources with the first rotating element fixed by the lock mechanism, in a motor running mode in which at least the second rotating machine is used as the power source for running out of the first rotating machine and the second rotating machine with operation of the engine stopped;
a state determining portion (96) determining whether the electric oil pump is in a state of insufficient capacity in which the electric oil pump is prevented from discharging the hydraulic oil alone at a flow rate required for the power transmission device; and
a flow rate control portion (98) prohibiting the double drive motor running to cause the hybrid vehicle to run in the single drive motor running and controlling the first rotating machine to rotate the mechanical oil pump to cause the mechanical oil pump to discharge the hydraulic oil at the flow rate required for the power transmission device when it is determined that the electric oil pump is in the state of insufficient capacity at the time of running in the motor running mode.

2. The control device of the hybrid vehicle according to claim 1, wherein the state determining portion determines whether the electric oil pump is in the state of insufficient capacity based on whether a failure has occurred so that the electric oil pump is prevented from discharging the hydraulic oil.

3. The control device of the hybrid vehicle according to claim 1 or 2, wherein
the state determining portion determines whether the electric oil pump is in the state of insufficient capacity based on whether a temperature (THoil) of the hydraulic oil is lower than a predetermined oil temperature (T1), and wherein
the predetermined oil temperature is a lower limit value of a predefined high oil temperature region of the hydraulic oil in which the electric oil pump discharges the hydraulic oil at the flow rate required for the power transmission device.

4. The control device of the hybrid vehicle according to claim 3, wherein
when it is determined that the electric oil pump is in the state of insufficient capacity since the temperature of the hydraulic oil is lower than the predetermined oil temperature, the flow rate control portion causes the electric oil pump to discharge the hydraulic oil in addition to controlling the first rotating machine to cause the mechanical oil pump to discharge the hydraulic oil.

5. The control device of the hybrid vehicle according to any one of claims 1 to 4, wherein
the hybrid control portion causes the hybrid vehicle to run in the double drive motor running in a first motor running region in which a required drive power is achieved by the single drive motor running at the time of running in the motor running mode, and wherein
the flow rate control portion prohibits the double drive motor running to cause the hybrid vehicle to run in the single drive motor running, when it is determined that the electric oil pump is in the state of insufficient capacity at the time of running in the motor running mode in the first motor running region.

6. The control device of the hybrid vehicle according to claim 5, wherein
when it is determined that the electric oil pump is in the state of insufficient capacity at the time of running in the motor running mode in a second motor running region in which the required drive power is achieved by the double drive motor running, the flow rate control portion prohibits the double drive motor running, and changes the motor running mode to a hybrid running mode in which at least the engine is used as the power source for running, instead of causing the hybrid vehicle to run in the single drive motor running.

7. The control device of the hybrid vehicle according to any one of claims 1 to 6, wherein
the flow rate control portion controls the first rotating machine such that a rotation speed (Nmop) of the mechanical oil pump is made higher as a temperature of the hydraulic oil is lower, when the first rotating machine is controlled to cause the mechanical oil pump to discharge the hydraulic oil.

8. The control device of the hybrid vehicle according to any one of claims 1 to 7, wherein
the flow rate control portion controls the first rotating machine such that a rotation speed of the mechanical oil pump is made higher as an engine cooling water temperature (THeng) is lower, when the first rotating machine is controlled to cause the mechanical oil pump to discharge the hydraulic oil.

9. The control device of the hybrid vehicle according to any one of claims 1 to 8, wherein
the flow rate control portion permits the double drive motor running and controls the motor dedicated to the electric oil pump to cause the electric oil pump to discharge the hydraulic oil at the flow rate required for the power transmission device, when it is determined that the electric oil pump is not in the state of insufficient capacity at the time of running in the motor running mode.

10. The control device of the hybrid vehicle according to any one of claims 1 to 9, wherein
the hybrid control portion causes the second rotating machine to output a torque responsible for a reaction torque generated in the output rotating member in association with the output of the first rotating machine, when the flow rate control portion controls the first rotating machine to rotate the mechanical oil pump.

11. The control device of the hybrid vehicle according to any one of claims 1 to 10, wherein
the power transmission device includes an automatic transmission (22) constituting a portion of a power transmission path between the output rotating member and the drive wheels and having a plurality of engagement devices (CB) with which each of a plurality of gear positions is formed by engaging a predetermined engagement device of the plurality of engagement devices, and wherein
the flow rate control portion causes the mechanical oil pump to discharge the hydraulic oil at the flow rate required for engagement of the engagement device, when it is determined that the electric oil pump is in the state of insufficient capacity at the time of running in the motor running mode.

12. The control device of the hybrid vehicle according to any one of claims 1 to 10, wherein
the power transmission device includes an engagement device (CB) having an operation state switched by the hydraulic oil, and wherein
the flow rate control portion causes the mechanical oil pump to discharge the hydraulic oil at the flow rate required for engagement of the engagement device, when it is determined that the electric oil pump is in the state of insufficient capacity at the time of running in the motor running mode.
